# EUROPEAN PATENT SPECIFICATION

(11) **EP 1 661 355 B1**
(45) Date of publication and mention of the grant of the patent: **07.03.2007**
(21) Application number: 04705725.2
(22) Date of filing: 27.01.2004
(51) Int. Cl.: H04L 29/06, G06F 1/00

(54) **METHOD AND DEVICE FOR SECURING CONTENT DELIVERY OVER A COMMUNICATION NETWORK VIA CONTENT KEYS**
VERFAHREN UND EINRICHTUNG ZUR SICHERUNG DER INHALTSABLIEFERUNG ÜBER EIN KOMMUNIKATIONSNETZ ÜBER INHALTSSCHLÜSSEL
PROCEDE ET DISPOSITIF PERMETTANT D'ASSURER LA DISTRIBUTION DE CONTENU SUR UN RESEAU DE COMMUNICATION VIA DES CLES DE CONTENU

(30) Priority: 13.08.2003 US 494836 P
(43) Date of publication of application: 31.05.2006
(73) Proprietor: Thomson Licensing, 92100 Boulogne-Billancourt (FR)
(72) Inventor: ZHANG, Junbiao, Bridgewater, NJ 08807 (US); LI, Jun, Plainsboro, NJ 08536 (US); RAMASWAMY, Kumar, Princeton, NJ 08540 (US)
(74) Representative: Berthier, Karine
(86) International application number: PCT/US2004/002407
(87) International publication number: WO 2005/020541

(56) References cited:
- EP-A- 1 253 762
- WO-A-01/11883
- WO-A-01/59549
- WO-A-01/98903
- WO-A-02/47356
- WO-A-97/38530

## Description

### Field Of The Invention

This application generally relates to electronic data transfer, and more specifically to methods for securing electronic information, in a networking environment.

### Background

In the delivery of multi-media content via a network operation, a user or content requester (CR) may operate a device, such as a cellular telephone or Personal Data Assistant (PDA), to send a request to a content server (CS) that authorizes the content server to immediately download the requested data, information items, or content. In another aspect, the CR may request the CS to download the requested data, information items, or content at a scheduled time. Still further, the CR may request the data, information items or content be downloaded or delivered to a second device, i.e., a content receiver or consumer (CC), either immediately or at a scheduled time. This latter operation is suitable when the CR device is operating on a low-bandwidth network and lacks sufficient bandwidth to download the required information. For example, a user may use a cellular device operating over a low-speed network to request audio and/or visual (multimedia) information be delivered to a receiving device, such as a home or laptop computer.

In WO 02/47356 A and WO 01/59549A, the encrypted content is delivered from the content provider to the content consumer before the authentication procedure.

However, before the CS provides the requested information the CR and/or CC must be authorized to respectively request and/or receive the desired information.
Accordingly, a need exists for devices that more fully secure media content from unauthorized access as well as for access from unauthorized parties.

### Summary

A method for descrambling secure content received over a network is disclosed. In one embodiment, the method is operable at a receiving device located at a remote site in communication with a network for receiving a first information item scrambled using an encrypting key known by the remote site, descrambling the first information item using a corresponding decrypting key, wherein the information item includes an access code and a content key, receiving a second information item scrambled using the content encryption key after the server hosting the second information verifies the access code and descrambling the second information item using the content key. In another aspect of the invention, a location of the desired content is included with the first information item. The location may be also encrypted using the key.

### Brief Description of the Drawings

Figure 1 illustrates a diagram of an exemplary content delivery framework;

Figure 2 illustrates an exemplary process for providing secure content delivery for the delivery framework shown in Figure 1;

Figure 3 illustrates a diagram of another exemplary content delivery framework;

Figure 4 illustrates an exemplary process for providing secure content delivery in the content delivery framework shown in Figure 3;

Figure 5 illustrates a flow chart of a process for scrambling content information secured in accordance with an aspect of the invention;

Figure 6 illustrates a flow chart of a process for descrambling secure content information in accordance with an aspect of the invention; and

Figure 7 illustrates a device for executing the process shown herein.

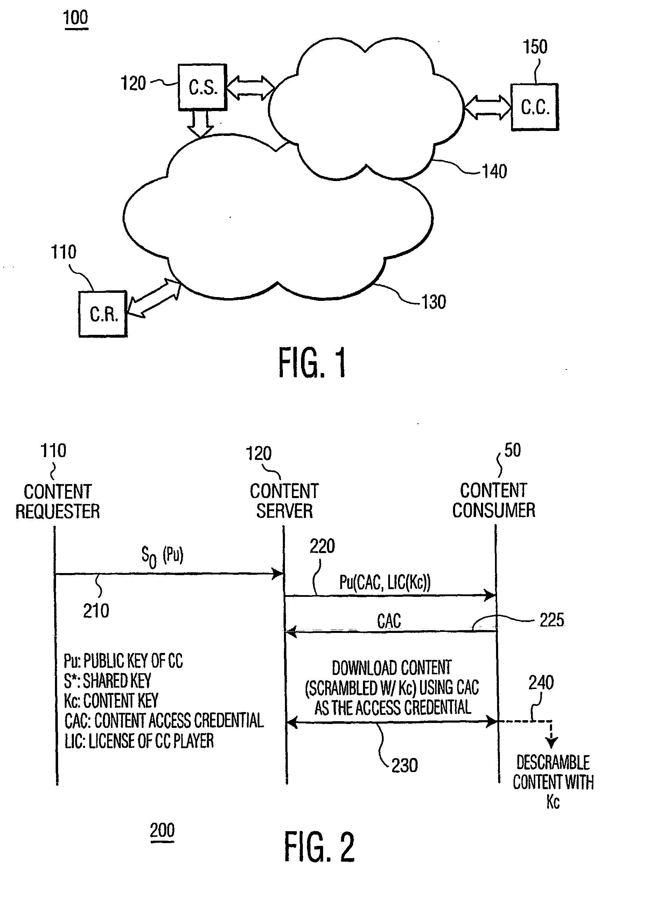

It is to be understood that these drawings are solely for purposes of illustrating the concepts of the invention and are not intended as a definition of the limits of the invention. The embodiments shown in Figures 1-7 and described in the accompanying detailed description are to be used as illustrative embodiments and should not be construed as the only manner of practicing the invention. Also, the same reference numerals, possibly supplemented with reference characters where appropriate, have been used to identify similar elements.

### Detailed Description

Figure 1 illustrates a diagram of the communications of a content delivery framework 100 comprising a Content Requester (CR) 110 in communication with Content Server (CS) 120 through network 130. CS 120 is further in communication with Content Consumer 150 through network 140. In an exemplary configuration, network 130 may be a low-speed network while network 140 may be a high-speed network. In another configuration, networks 130 and 140 may be the same network or different networks of comparable speeds. In one embodiment, CR 110 may be a cellular telephone and network 130 may be a relatively low speed wireless network. Network 140 may be a high-speed network, such as the Internet or a specialized content delivery network (CDN). In another embodiment, CR 110 may be a laptop computer and network 130 may be a local-area network connected to the Internet, which can be represented by network 140.

Figure 2 illustrates an exemplary operation 200 for providing secure content delivery over the network configuration shown in Figure 1. In this illustrative operation, CR 110 generates a request for information content, shown as arrow 210, to CS 120 via network 130. In one exemplary embodiment, request 210 may include an encryption key associated with Content Consumer (CC) 150. For example, if CC 150 uses public/private key encryption, then the public key of CC 150, denoted as Pᵤ, may be provided to CS 120. Digital certificates may also be used to verify that content requester 110 is authorized to access CS 120. In another aspect, the key, Pu, may be a key value that is known or shared by CS 120 and CC 150.

The provided encryption key may itself be scrambled or encrypted using a key that is known to or shared by both CR 110 and CS 120. The use of a shared key, denoted as So and represented by arrow 210, assures CS 120 that CR 110 is authorized to make a request. CR 110 may, in one aspect, be provided with shared key So when registering for the service provided by CS 120. In another aspect, CR 110 may be in communication with CS 120 using a secured link, which may be set up by transmitting a conventional user name and password to CS 120. CS 120 may in response provide shared key So to user CR 110. A reference to the designated CC 150, e.g., Internet Protocol address, or location, etc., may also be contained within the request.

CS 120, after authenticating that CR 110 is authorized to make request 310, creates a Content Access Credential (CAC) or access code for the designated content consumer. The CAC is used to access the requested content by the designated CC 150 at a later time. A notification, represented as arrow 220, is provided to CC 150. Notification 220, in this case, includes the CAC and a content key, referred to as K_{c}. Key K_{c} is used to scramble or encrypt the requested content. CAC and K_{c} are scrambled or encrypted using key Pᵤ, associated with CC 150, which, in this illustrated case, was provided by CR 110. A use-limitation or license, represented as LIC, may also be associated with content key K_{c}. In this case, license LIC may limit the number of times or a time period that key K_{c} is rendered valid. Such use-limitation on key K_{c} provides a means to limit subsequent distribution of the content.

CC 150 decrypts or de-scrambles the notification message to obtain the CAC and key K_{c} using the decryption key associated with the key Pᵤ. The CAC is then transmitted to CS 120, shown as arrow 225, to authorize the transmission or downloading of the requested information item. In this illustrated sequence, content downloading is represented by arrow 230. Upon receipt, the information item is de-scrambled or decrypted, represented by arrow 240, using the provided key, K_{c}. CC 150 is now able to view the de-scrambled content requested by CC 110. As would be recognized by those skilled in the art, key K_{c} is used to encrypt and decrypt the content provided and may thus be referred to as an encryption key, a decryption key or a content delivery key.

Although the sequence described herein provides for relatively immediate transmission of the requested content, it would be recognized by those skilled in the art that the transmission of CAC from CS 120 may occur at a predetermined time or with a predetermined delay calculated from the time the initial request was made. The transmission of CAC from CC 150 to CS 120 may be performed automatically or manually. In the manual case, a user may initiate an action on CC 150 to cause CAC to be transmitted. Similarly, CS 120 may delay transmission of CAC and content key K_{c} until a known time or after the lapse of a known time offset.

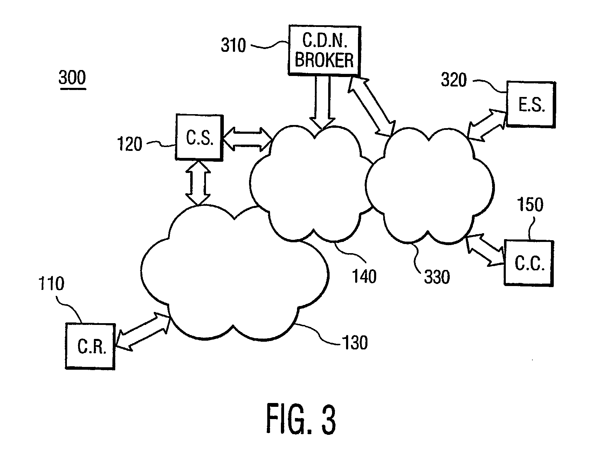

Figure 3 illustrates a diagram of a content delivery framework 300 in accordance with an aspect of the present invention. In this illustrative case, CR 110 and CS 120 are in communication via network 130 as previously described. CS 120 is also in communication with CDN broker 310 via network 140 and CDN broker 310 may further be in communication with one or more Edge Servers, represented by ES 320, via network 330. Furthermore, CC 150, in this illustrated case, has access to at least network 330. As previously discussed, networks 130, 140 and 330 may be networks that have different, the same or comparable data transmission rates. For example, network 130 may be a low-speed, low bandwidth network and networks 140 and 330 may be high speed, large bandwidth networks. Network 330 may further be representative of a specialized content delivery network (CDN). As would be recognized by those skilled in the art, networks 130, 140 and 330 may also be the same network. The CDN configuration shown and the use of CDN broker 310 enables the system to distribute requested content to different edge servers that may be local to a plurality of users that may request the same content.

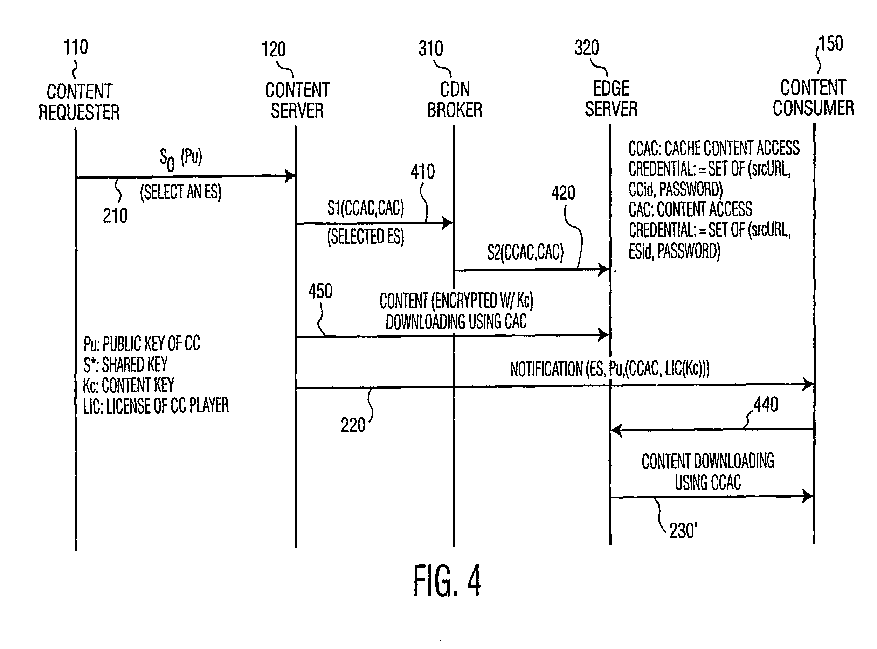

Figure 4 illustrates an exemplary chronological sequence 400 for providing secure content delivery over the network configuration shown in Figure 3. In this sequence, CR 110 requests, represented as arrow 210, that CS 120 provide designated content to CC 150, as previously discussed. Content Server 120 obtains information regarding a designated ES associated with CC 150 from the CDN broker 310. CS 120 further generates a CAC and creates a Cache Content Access Credential (CCAC). In one aspect of the invention, CAC includes the address of the designated CC 150 and a password. Similarly, the CCAC includes the address of a designated edge server (ES) 320, and a second password. The CAC and CCAC are encrypted and provided to CDN broker 310, as represented by arrow 410. In this case, CAC and CCAC are encrypted using a key, denoted as S₁, which is known or shared by CS 120 and CDN broker 310. CDN broker 310 decrypts the transmitted information, and in this case, re-encrypts the CAC and CCAC using a key, referred to as S₂. Key S₂ is common to or shared by CDN broker 310 and ES 320. ES 320 uses the CAC to access the requested content, as represented by arrow 430, which is scrambled using a content key, K_{c}, from CS 120. CS 120 further provides a notification, as shown by arrow 220, to CC 150. The notification 220, similar to that shown in Figure 2, contains information regarding the location of the requested information or content, e.g., address of ES 320, and the encrypted or scrambled CCAC and content key K_{c}. As previously described, the CCAC and key K_{c} are encrypted using the key Pᵤ associated with or known by CC 150. Furthermore, the location of the content may also be encrypted. In another aspect the location of the content may be provided unscrambled.

CC 150 may then decrypt the information and transmit the received CCAC to ES 320, as represented by arrow 340. CC 150 may then download the requested or desired content, encrypted using the key K_{c}, as represented by arrow 230'. CC 150 may then decrypt the received content as previously described. In another aspect of the invention, key K_{c} may be associated with a use-limitation license that limits the duration of validity of key K_{c}.

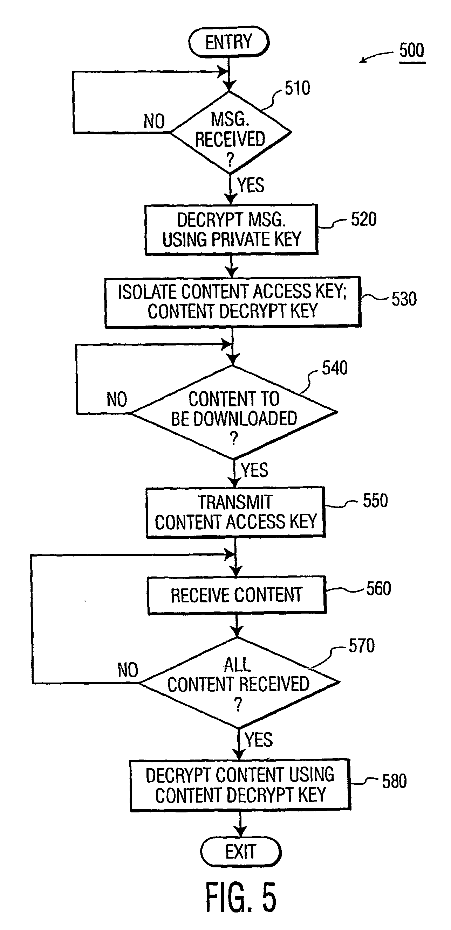

Figure 5 illustrates a flow chart of an exemplary process 500 for decrypting requested content in accordance with the principles of the invention. In this exemplary process, a determination is made at block 510 whether a message has been received. If the answer is negative, then the process continues to wait for the receipt of a message. However, if the answer is in the affirmative, the message is decrypted or descrambled using a private key at block 520. The content access code and a key, K_{c}, are obtained from the decrypted message. For example, with regard to the sequence shown in Figure 2, the content access key or code is the generated CAC whereas, with regard to Figure 3, the content access key or code is the generated CCAC.

In one aspect of the invention, the location of the desired content may also be included in the message. The location may be provided in the clear or may be scrambled. In one aspect of the invention, the content location may be known by the CC 150 and, thus, need not be contained in the transmitted message.

At block 540, a determination is made whether the requested content is to be downloaded. If the answer is negative, then the process waits at block 540 until some indication that downloading is desired is received. For example, an indication that downloading is desired may occur at a known time, a known time offset from a requested time, or manually by a user. The known time or known time offset may be provided by the user during the initial request.

When an indication is received, the content access key (CAC or CCAC) is transmitted to the known or specified content location, at block 550. At block 560, the content is received and at block 570 a determination is made whether all the content has been received. If the answer is negative, then processing continues at block 560 to continue receiving the desired content. However, if the answer is in the affirmative, the content is decrypted using the provided content key, i.e., K_{c}.

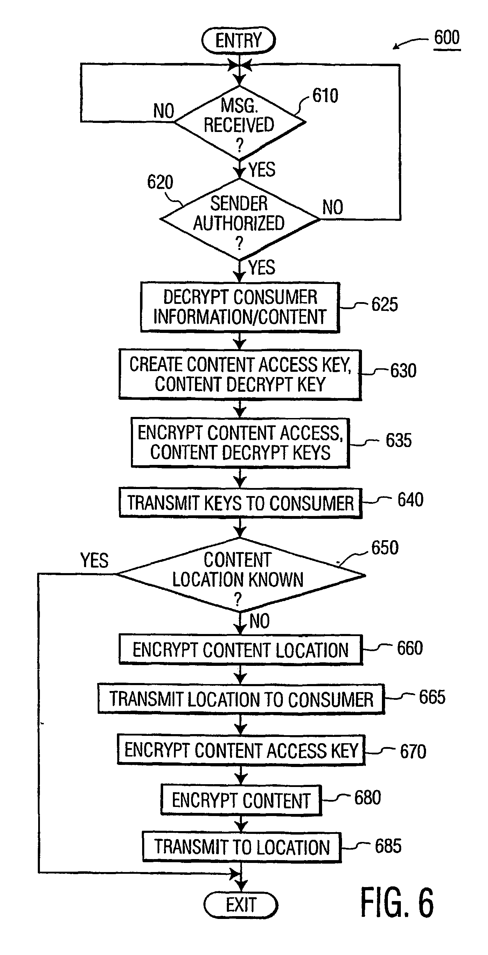

Figure 6 illustrates a flow chart of a process 600 for generating content delivery keys or codes in accordance with the principles of the invention. In this illustrated process, at block 610, a determination is made whether a message has been received. If the answer is negative, then the process continues to wait for a message.

However, if the answer is in the affirmative, then a determination is made, at block 620, whether the sender is authorized to request content delivery. If the answer is negative, then the process returns to block 610 to continue waiting for a message. However, if the answer is in the affirmative, then at block 625 the request message is decrypted using a key common to both parties. The message includes information regarding the desired content and may include a desired consumer location if the desired consumer location is not known, prefixed or predetermined, e.g., predesignated address. This information may be sent unencrypted. The consumer public key or other encryption information is sent encrypted.

At block 630 a content access key and a content key, K_{c}, are generated and are encrypted using the public key or other encryption information provided by the requester or user. The encrypted information is transmitted to the consumer via a notification message at block 640.

At block 650, a determination is made whether the desired content is stored or maintained at a location known to the consumer, i.e., the content location is predefined or predetermined. If the answer is in the affirmative, then processing is completed. However, if the answer is negative, then the location of the content is encrypted using the provided public key or other encryption information at block 660 and transmitted to the consumer at block 665.

At block 670, the content access key or code is encrypted or scrambled using an encryption key known between the content server and the edge server that contains or will contain the desired content. At block 680, the content is encrypted using the content delivery key, K_{c}. The use of key K_{c}, to scramble the content is advantageous as the server does not require additional levels of security to prevent unauthorized access to the content. Furthermore, storing the media using the key, K_{c}, is further advantageous as it stores the content in a form that is transparent to the consumer regardless of whether the content server or an edge server delivers the content. At block 685, the content is transmitted to the location of the consumer or user. It would be recognized by those skilled in the art that the process shown in Figure 5 relates more specifically to the sequence shown in Figure 4, which includes additional process sequence steps over those shown in Figure 1. However, it would also be recognized that process 600 may also relate to the sequence steps shown in Figure 1 when the location of the content is known by the consumer.

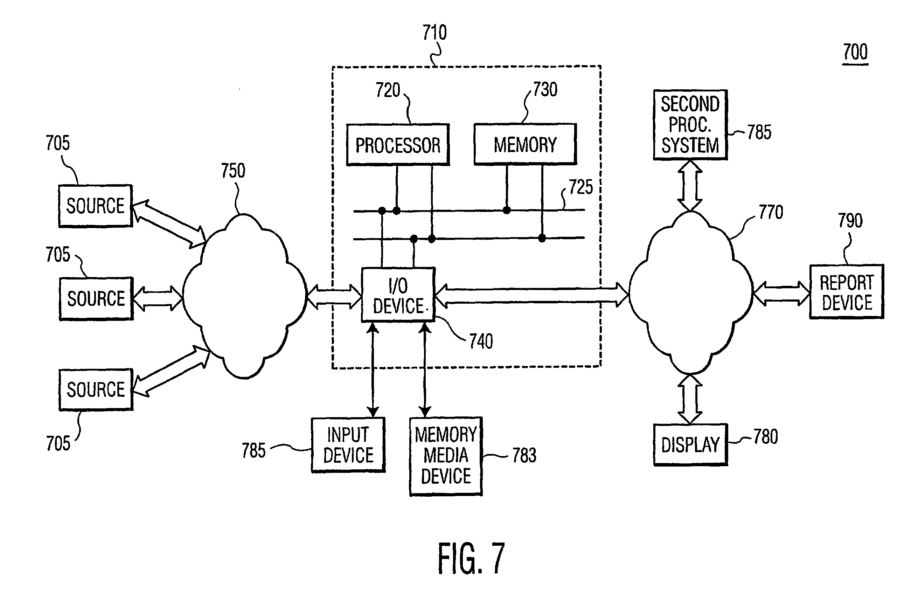

Figure 7 illustrates a system 700 for implementing the principles of the invention as depicted in the exemplary processing shown in Figures 2-4. In this exemplary system embodiment 700, input data is received from sources 705 over network 750 and is processed in accordance with one or more programs, either software or firmware, executed by processing system 710. The results of processing system 710 may then be transmitted over network 770 for viewing on display 780, reporting device 790 and/or a second processing system 795.

Specifically, processing system 710 includes one or more input/output devices 740 that receive data from the illustrated source devices 705 over network 750. The received data is then applied to processor 720, which is in communication with input/output device 740 and memory 730. Input/output devices 740, processor 720 and memory 730 may communicate over a communication medium 725. Communication medium 725 may represent a communication network, e.g., ISA, PCI, PCMCIA bus, one or more internal connections of a circuit, circuit card or other device, as well as portions and combinations of these and other communication media. Processing system 710 and/or processor 720 may be representative of a handheld calculator, special purpose or general purpose processing system, desktop computer, laptop computer, palm computer, or personal digital assistant (PDA) device, etc., as well as portions or combinations of these and other devices that can perform the operations illustrated.

Processor 720 may be a central processing unit (CPU) or dedicated hardware/software, such as a PAL, ASIC, FGPA, operable to execute computer instruction code or a combination of code and logical operations. In one embodiment, processor 720 may include code which, when executed, performs the operations illustrated herein. The code may be contained in memory 730, may be read or downloaded from a memory medium such as a CD-ROM or floppy disk, represented as 783, may be provided by a manual input device 785, such as a keyboard or a keypad entry, or may be read from a magnetic or optical medium (not shown) when needed. Information items provided by input device 783, 785 and/or magnetic medium may be accessible to processor 720 through input/output device 740, as shown. Further, the data received by input/output device 740 may be immediately accessible by processor 720 or may be stored in memory 730. Processor 720 may further provide the results of the processing to display 780, recording device 790 or a second processing unit 795.

As one skilled in the art would recognize, the terms processor, processing system, computer or computer system may represent one or more processing units in communication with one or more memory units and other devices, e.g., peripherals, connected electronically to and communicating with the at least one processing unit. Furthermore, the devices illustrated may be electronically connected to the one or more processing units via internal busses, e.g., serial, parallel, ISA bus, microchannel bus, PCI bus, PCMCIA bus, USB, etc., or one or more internal connections of a circuit, circuit card or other device, as well as portions and combinations of these and other communication media, or an external network, e.g., the Internet and Intranet. In other embodiments, hardware circuitry may be used in place of, or in combination with, software instructions to implement the invention. For example, the elements illustrated herein may also be implemented as discrete hardware elements or may be integrated into a single unit.

As would be understood, the operations illustrated may be performed sequentially or in parallel using different processors to determine specific values. Processing system 710 may also be in two-way communication with each of the sources 705. Processing system 710 may further receive or transmit data over one or more network connections from a server or servers over, e.g., a global computer communications network such as the Internet, Intranet, a wide area network (WAN), a metropolitan area network (MAN), a local area network (LAN), a terrestrial broadcast system, a cable network, a satellite network, a wireless network, or a telephone network (POTS), as well as portions or combinations of these and other types of networks. As will be appreciated, networks 750 and 770 may also be internal networks or one or more internal connections of a circuit, circuit card or other device, as well as portions and combinations of these and other communication media or an external network, e.g., the Internet and Intranet.

While there has been shown, described, and pointed out fundamental novel features of the present invention as applied to preferred embodiments thereof, it will be understood that various omissions and substitutions and changes in the apparatus described, in the form and details of the devices disclosed, and in their operation, may be made by those skilled in the art without departing from the spirit of the present invention. Although the present invention has been disclosed with regard to securing multi-media content, one skilled in the art would recognize that the method and devices described herein may be applied to any information requiring secure transmission and authorized access. It is expressly intended that all combinations of those elements that perform substantially the same function in substantially the same way to achieve the same results are within the scope of the invention. Substitutions of elements from one described embodiment to another are also fully intended and contemplated.

## Claims

1. A device (150), located at a remote site in communication with a network having at least one server (120), comprising:
a processor in communication with a memory, said processor operable to execute code for:
receiving a first information item comprising an access code and a content key scrambled using an encryption key known by said remote site, said access code generated in response to a request for a second information item by a content requester (110);
descrambling said first information item using a corresponding decrypting key;
transmitting said access code to a server hosting said second information item; and
receiving said second information item scrambled using said content key after said server hosting the second information item verifies said access code.

2. The device as recited in claim 1, wherein said processor is further operable to execute code for:
descrambling said second information item using said content key.

3. The device as recited in claim 1, wherein said first information item includes a use-limit indication.

4. The device as recited in claim 1, wherein said processor is further operable to execute code for
transmitting said unencrypted access code selected from the group consisting of: automatically, at a predetermined time, at a predetermined time offset, responsive to a manual input.

5. The device as recited in claim 1, wherein said content key is selected from the group consisting of: a public key, a shared key.

6. The device as recited in claim 3, wherein said use-limit indication is selected from the group consisting of: number of uses, time-period.

7. The device as recited in claim 1, wherein said first information item further includes a content location.

8. The device as recited in claim 7, wherein said processor is further operable to execute code for transmitting said content location.

9. The device as recited in claim 7, wherein said content location is known.

10. A method, operable at a receiving device (150) located at a remote site in communication with a network having at least one server (120), for descrambling secure content received over said network, said method comprising the steps of:
receiving a first information item comprising an access code and a content key scrambled using an encryption key known by said remote site, said access code generated in response to a request for a second information item by a content requester (110);
descrambling said first information item using a corresponding decrypting key;
transmitting said access code to a server hosting said second information item;
receiving said second information item, scrambled using said content key, after the server hosting the second information verifies said access code; and
descrambling said second information item using said content key.

11. The method as recited in claim 10, wherein said first information item includes a use-limit indication.

12. The method as recited in claim 10, wherein said content key is selected from the group consisting of: a public key, a shared key.

13. The method as recited in claim 11, wherein said use-limit indication is selected from the group consisting of: number of uses, time-period.

14. The method as recited in claim 10, wherein said first information item further includes a content location.

15. The method as recited in claim 14, wherein said content location is known.

16. A method for transferring secure content over a network comprising the steps of :
receiving a request for content at a first server (120) over a first network from a file requesting device (110), said request including an encryption key known to a designated remote site ;
generating a first information item containing an access code and a content key at said server in response to said request for content by said file requesting device;
transferring said first information item to said designated remote site having a file receiving device (150), wherein said access code and said content key are scrambled using said encryption key;
receiving said access code from said designated remote site having said file receiving device; and
transferring over a second network said secure content after verification of said access code, wherein said secure content is encrypted using said content key.

17. The method as recited in claim 16, wherein said first network and said second network are the same network.

18. The method as recited in claim 16, wherein said file requesting device is selected from the group consisting of: personal digital assistant, cellular telephone, notebook computer and personal computer.

19. The method as recited in claim 16, wherein said file receiving device is selected from the group consisting of: personal digital assistant, cellular telephone, notebook computer and personal computer.

20. The method as recited in claim 16, wherein said first network is a wireless network.

21. The method as recited in-claim 16, wherein said first information item includes a location of said content.

22. The method as recited in claim 16, further comprising the step of :
transmitting said content to at least one other server in communication with said first server, wherein said content is scrambled using said content key.

23. The method as recited in claim 22, further comprising the steps of:
transferring over a second network said secure content after verification of said access code, wherein said secure content is scrambled using said content key.

24. The method as recited in claim 16, wherein the step of transferring said access code and said content key is over said first network.

25. The method as recited in claim 16, wherein the step of transferring said access code and said content key is over said second network.

26. The method as recited in claim 16, wherein said second network is a high-speed network.

27. The method as recited in claim 26, wherein said second network is a content delivery network.

28. The method as recited in claim 16, further comprising the step of
transferring a location of said content to said designated remote site.

## Patentansprüche

1. Einrichtung (150), die sich an einem abgesetzten Standort in Kommunikation mit einem Netzwerk mit mindestens einem Server (120) befindet, umfassend:
einen mit einem Speicher kommunizierenden Prozessor, wobei der Prozessor betreibbar ist, um Code für folgendes auszuführen:
Empfangen eines ersten Informationselements, das einen Zugangscode und einen Inhaltsschlüssel umfaßt, der unter Verwendung eines dem abgesetzten Standort bekannten Verschlüsselungsschlüssels verwürfelt wird, wobei der Zugangscode als Reaktion auf eine . Anforderung eines zweiten Informationselements durch einen Inhaltsanforderer (110) erzeugt wird;
Entwürfeln des ersten Informationselements unter Verwendung eines entsprechenden Entschlüsselungsschlüssels;
Senden des Zugangscodes zu einem Server, der für das zweite Informationselement Host ist; und
Empfangen des unter Verwendung des Inhaltsschlüssels verwürfelten zweiten Informationselements, nachdem der Server, der für das zweite Informationselement Host ist, den Zugangscode verifiziert.

2. Einrichtung nach Anspruch 1, wobei der Prozessor ferner betreibbar ist, um Code für folgendes auszuführen:
Entwürfeln des zweiten Informationselements unter Verwendung des Inhaltsschlüssels.

3. Einrichtung nach Anspruch 1, wobei das erste Informationselement eine Benutzungsbegrenzungsangabe enthält.

4. Einrichtung nach Anspruch 1, wobei der Prozessor ferner betreibbar ist, um Code für folgendes auszuführen:
Senden des unverschlüsselten Zugangscodes, ausgewählt aus der folgenden Gruppe:
automatisch, zu einem vorbestimmten Zeitpunkt, zu einem vorbestimmten Zeit-Offset, als Reaktion auf eine manuelle Eingabe.

5. Einrichtung nach Anspruch 1, wobei der Inhaltsschlüssel aus der folgenden Gruppe ausgewählt wird:
ein öffentlicher Schlüssel, ein gemeinsam benutzter Schlüssel.

6. Einrichtung nach Anspruch 3, wobei die Benutzungsbegrenzungsangabe aus der folgenden Gruppe ausgewählt wird: Anzahl der Benutzungen, Zeitraum.

7. Einrichtung nach Anspruch 1, wobei das erste Informationselement ferner einen Inhaltsort enthält.

8. Einrichtung nach Anspruch 7, wobei der Prozessor ferner betreibbar ist, um Code zum Senden des Inhaltsorts auszuführen.

9. Einrichtung nach Anspruch 7, wobei der Inhaltsort bekannt ist.

10. Verfahren zum Betrieb in einer Empfangseinrichtung (150), die sich an einem abgesetzten Standort in Kommunikation mit einem Netzwerk mit mindestens einem Server (120) befindet, zum Entwürfeln von über das Netzwerk empfangenem sicherem Inhalt, mit den folgenden Schritten:
Empfangen eines ersten Informationselements, das einen Zugangscode und einen Inhaltsschlüssel umfaßt, der unter Verwendung eines dem abgesetzten Standort bekannten Verschlüsselungsschlüssels verwürfelt wird, wobei der Zugangscode als Reaktion auf eine Anforderung eines zweiten Informationselements durch einen Inhaltsanforderer (110) erzeugt wird;
Entwürfeln des ersten Informationselements unter Verwendung eines entsprechenden Entschlüsselungsschlüssels;
Senden des Zugangscodes zu einem Server, der für das zweite Informationselement Host ist; und
Empfangen des unter Verwendung des Inhaltsschlüssels verwürfelten zweiten Informationselements, nachdem der Server, der für das zweite Informationselement Host ist, den Zugangscode verifiziert; und
Entwürfeln des zweiten Informationselements unter Verwendung des Inhaltsschlüssels.

11. Verfahren nach Anspruch 10, wobei das erste Informationselement eine Benutzungsbegrenzungsangabe enthält.

12. Verfahren nach Anspruch 10, wobei der Inhaltsschlüssel aus der folgenden Gruppe ausgewählt wird: ein öffentlicher Schlüssel, ein gemeinsam benutzter Schlüssel.

13. Verfahren nach Anspruch 11, wobei die Benutzungsbegrenzungsangabe aus der folgenden Gruppe ausgewählt wird: Anzahl der Benutzungen, Zeitraum.

14. Verfahren nach Anspruch 10, wobei das erste Informationselement ferner einen Inhaltsort enthält.

15. Verfahren nach Anspruch 14, wobei der Inhaltsort bekannt ist.

16. Verfahren zum Transferieren von sicherem Inhalt über ein Netzwerk, mit den folgenden Schritten:
Empfangen einer Anforderung von Inhalt an einem ersten Server (120) über ein erstes Netzwerk von einer Dateianforderungseinrichtung (110), wobei die Anforderung einen Verschlüsselungsschlüssel enthält, der einem **gekennzeichnet**en abgesetzten Standort bekannt ist;
Erzeugen eines ersten Informationselements, das einen Zugangscode und einen Inhaltsschlüssel enthält, in dem Server als Reaktion auf die Anforderung von Inhalt durch die Dateianforderungseinrichtung;
Transferieren des ersten Informationselements zu dem **gekennzeichnet**en abgesetzten Standort mit einer Dateiempfangseinrichtung (150), wobei der Zugangscode und der Inhaltsschlüssel unter Verwendung des Verschlüsselungsschlüssels verwürfelt werden; Empfangen des Zugangscodes von dem **gekennzeichnet**en abgesetzten Standort mit der Dateiempfangseinrichtung; und
Transferieren des sicheren Inhalts nach der Verifikation des Zugangscodes über ein zweites Netzwerk, wobei der sichere Inhalt unter Verwendung des Inhaltsschlüssels verschlüsselt wird.

17. Verfahren nach Anspruch 16, wobei das erste Netzwerk und das zweite Netzwerk dasselbe Netzwerk sind.

18. Verfahren nach Anspruch 16, wobei die Dateianforderungseinrichtung aus der folgenden Gruppe ausgewählt wird: persönlicher digitaler Assistent, Mobiltelefon, Notebook-Computer und Personal Computer.

19. Verfahren nach Anspruch 16, wobei die Dateiempfangseinrichtung aus der folgenden Gruppe ausgewählt wird: persönlicher digitaler Assistent, Mobiltelefon, Notebook-Computer und Personal Computer.

20. Verfahren nach Anspruch 16, wobei das erste Netzwerk ein drahtloses Netzwerk ist.

21. Verfahren nach Anspruch 16, wobei das erste Informationselement einen Ort des Inhalts enthält.

22. Verfahren nach Anspruch 16, ferner mit dem folgenden Schritt:
Senden des Inhalts zu mindestens einem anderen Server, der mit dem ersten Server kommuniziert, wobei der Inhalt unter Verwendung des Inhaltsschlüssels verwürfelt wird.

23. Verfahren nach Anspruch 22, ferner mit den folgenden Schritten:
Transferieren des sicheren Inhalts über ein zweites Netzwerk nach Verifikation des Zugangscodes, wobei der sichere Inhalt unter Verwendung des Inhaltsschlüssels verwürfelt wird.

24. Verfahren nach Anspruch 16, wobei der Schritt des Transferierens des Zugangscodes und des Inhaltsschlüssels über das erste Netzwerk erfolgt.

25. Verfahren nach Anspruch 16, wobei der Schritt des Transferierens des Zugangscodes und des Inhaltsschlüssels über das zweite Netzwerk erfolgt.

26. Verfahren nach Anspruch 16, wobei das zweite Netzwerk ein schnelles Netzwerk ist.

27. Verfahren nach Anspruch 26, wobei das zweite Netzwerk ein Inhaltsabliefernetzwerk ist.

28. Verfahren nach Anspruch 16, ferner mit dem folgenden Schritt:
Transferieren eines Orts des Inhalts zu dem **gekennzeichnet**en abgesetzten Standort.

## Revendications

1. Un dispositif (150) situé sur un site distant en communication avec un réseau comportant au moins un serveur (120), comprenant :
un processeur en communication avec une mémoire, ledit processeur étant utilisable pour exécuter un code pour :
recevoir un premier élément d'information comprenant un code d'accès et une clé de contenu embrouillés à l'aide d'une clé de chiffrement connue dudit site distant, ledit code d'accès étant généré en réponse à une demande pour un deuxième élément d'information par un demandeur de contenu (110) ;
désembrouiller ledit premier élément d'information à l'aide d'une clé de déchiffrement correspondante ;
transmettre ledit code d'accès à un serveur hébergeant ledit deuxième élément d'information ;
et
recevoir ledit deuxième élément d'information embrouillé à l'aide de ladite clé de contenu après que ledit serveur hébergeant le deuxième élément d'information a vérifié ledit code d'accès.

2. Le dispositif selon la revendication 1, où ledit processeur est en outre utilisable pour exécuter un code pour :
désembrouiller ledit deuxième élément d'information à l'aide de ladite clé de contenu.

3. Le dispositif selon la revendication 1, où ledit premier élément d'information inclut une indication de limite d'utilisation.

4. Le dispositif selon la revendication 1, où ledit processeur est en outre utilisable pour exécuter un code pour :
transmettre ledit code d'accès non chiffré sélectionné à partir du groupe constitué de :
automatiquement, à un moment prédéterminé, à moment prédéterminé décalé, en réponse à une entrée manuelle.

5. Le dispositif selon la revendication 1, où ladite clé de contenu est sélectionnée à partir du groupe constitué de : une clé publique, une clé partagée.

6. Le dispositif selon la revendication 3, où ladite indication de limite d'utilisation est sélectionnée à partir du groupe constitué de : nombre d'utilisations, période.

7. Le dispositif selon la revendication 1, où ledit premier élément d'information inclut en outre un emplacement de contenu.

8. Le dispositif selon la revendication 7, où ledit processeur est en outre utilisable pour exécuter un code pour transmettre ledit emplacement de contenu.

9. Le dispositif selon la revendication 7, où ledit emplacement de contenu est connu.

10. Un procédé, utilisable sur un dispositif de réception (150) situé sur un site distant en communication avec un réseau comportant au moins un serveur (120), pour désembrouiller un contenu sécurisé reçu sur ledit réseau, ledit procédé comprenant les étapes de :
réception d'un premier élément d'information comprenant un code d'accès et une clé de contenu embrouillés à l'aide d'une clé de chiffrement connue dudit site distant, ledit code d'accès étant généré en réponse à une demande pour un deuxième élément d'information par un demandeur de contenu (110) ;
désembrouillage dudit premier élément d'information à l'aide d'une clé de déchiffrement correspondante ;
transmission dudit code d'accès à un serveur hébergeant ledit deuxième élément d'information ;
réception dudit deuxième élément d'information, embrouillé à l'aide de ladite clé de contenu, après que le serveur hébergeant la deuxième information a vérifié ledit code d'accès ; et
désembrouillage dudit deuxième élément d'information à l'aide de ladite clé de contenu.

11. Le procédé selon la revendication 10, où ledit premier élément d'information inclut une indication de limite d'utilisation.

12. Le procédé selon la revendication 10, où ladite clé de contenu est sélectionnée à partir du groupe constitué de : une clé publique, une clé partagée.

13. Le procédé selon la revendication 11, où ladite indication de limite d'utilisation est sélectionnée à partir du groupe constitué de : nombre d'utilisations, période.

14. Le procédé selon la revendication 10, où ledit premier élément d'information inclut en outre un emplacement de contenu.

15. Le procédé selon la revendication 14, où ledit emplacement de contenu est connu.

16. Un procédé pour transférer un contenu sécurisé sur un réseau, comprenant les étapes de :
réception d'une demande pour un contenu sur un premier serveur (120) sur un premier réseau provenant d'un dispositif de demande de fichier (110), ladite demande incluant une clé de chiffrement connue du site distant désigné ;
génération d'un premier élément d'information contenant un code d'accès et une clé de contenu sur ledit premier serveur en réponse à ladite demande pour le contenu par ledit dispositif de demande de fichier ;
transfert dudit premier élément d'information audit site distant désigné comportant un dispositif de réception de fichier (150), où ledit code d'accès et ladite clé de contenu sont embrouillés à l'aide de ladite clé de chiffrement ;
réception dudit code d'accès à partir dudit site distant désigné comportant ledit dispositif de réception de fichier ; et de
transfert sur un deuxième réseau dudit contenu sécurisé après la vérification dudit code d'accès, où ledit contenu sécurisé est chiffré à l'aide de ladite clé de contenu.

17. Le procédé selon la revendication 16, où ledit premier réseau et ledit deuxième réseau constituent le même réseau.

18. Le procédé selon la revendication 16, où ledit dispositif de demande de fichier est sélectionné à partir du groupe constitué de : un assistant numérique personnel, un téléphone cellulaire, un ordinateur bloc-notes et un ordinateur personnel.

19. Le procédé selon la revendication 16, où ledit dispositif de réception de fichier est sélectionné à partir du groupe constitué de : un assistant numérique personnel, un téléphone cellulaire, un ordinateur bloc-notes et un ordinateur personnel.

20. Le procédé selon la revendication 16, où ledit premier réseau est un réseau sans fil.

21. Le procédé selon la revendication 16, où ledit premier élément d'information inclut un emplacement dudit contenu.

22. Le procédé selon la revendication 16, comprenant en outre l'étape de :
transmission dudit contenu sur au moins un autre serveur en communication avec ledit premier serveur, où ledit contenu est embrouillé à l'aide de ladite clé de contenu.

23. Le procédé selon la revendication 22, comprenant en outre les étapes de :
transfert sur un deuxième réseau dudit contenu sécurisé après une vérification dudit code d'accès, où ledit contenu sécurisé est embrouillé à l'aide de ladite clé de contenu.

24. Le procédé selon la revendication 16, où l'étape de transfert dudit code d'accès et de ladite clé de contenu se situe sur ledit premier réseau.

25. Le procédé selon la revendication 16, où l'étape de transfert dudit code d'accès et de ladite clé de contenu se situe sur ledit deuxième réseau.

26. Le procédé selon la revendication 16, où ledit deuxième réseau est un réseau haut débit.

27. Le procédé selon la revendication 26, où ledit deuxième réseau est un réseau de distribution de contenu.

28. Le procédé selon la revendication 16, comprenant en outre l'étape de :
transfert d'un emplacement dudit contenu vers ledit site distant désigné.
